# FASCICULE DE BREVET EUROPEEN

(11) **EP 3 386 288 B1**
(45) Date de publication et mention de la délivrance du brevet: **10.11.2021**
(21) Numéro de dépôt: 16808665.0
(22) Date de dépôt: 08.12.2016
(51) Int. Cl.: A01C 1/06, A01N 25/04

(54) **TRAITEMENT DE SEMENCES PAR POLYMÈRE HYDROGONFLABLE**
SAATGUTBEHANDLUNG UNTER VERWENDUNG VON WASSERQUELLBAREM POLYMER
SEED TREATMENT USING HYDROSWELLABLE POLYMER

(30) Priorité: 09.12.2015 FR 1562058
(43) Date de publication de la demande: 17.10.2018
(73) Titulaire: S.P.C.M. SA, 42160 Andrézieux Bouthéon (FR)
(72) Inventeur: OMONT, Alexandre, 42163 Andrezieux Cedex (FR); LECOINTE, Charles, 42163 Andrezieux Cedex (FR)
(74) Mandataire: Lavoix
(86) Numéro de dépôt international: PCT/EP2016/080296
(87) Numéro de publication internationale: WO 2017/097920

(56) Documents cités:
- US-A- 4 249 343
- Snf: "Water retainers for Soils and Substrates", , 31 janvier 2014 (2014-01-31), XP055295242, Extrait de l'Internet: URL:http://snf.us/wp-content/uploads/2014/ 08/Agriculture-AQUASORB2.pdf [extrait le 2016-08-12]

## Description

L'invention concerne le domaine du traitement de matériel végétal, en particulier du matériel végétal de propagation ou de reproduction, par exemple des semences. Le procédé selon l'invention comprend l'application sur tout ou partie de la surface d'un matériel végétal d'une dispersion aqueuse comprenant (a) des particules d'au moins un polymère hydrogonflable et (b) au moins un composé choisi parmi un sel minéral, un sel organique, un polymère organique dispersant et leurs mélanges.

L'invention concerne également ce matériel végétal traité ainsi que son utilisation pour la culture ou pour la production d'une plante.

De manière générale, l'amélioration des conditions de culture est de plus en plus nécessaire.

Les méthodes de traitement de matériel végétal, notamment de matériel végétal de propagation ou de reproduction, sont un axe majeur de développement technique.

Ainsi, l'enrobage de matériel végétal, par exemple au moyen de polymère hydrogonflable, est une pratique d'intérêt dans le domaine agricole. En effet, les polymères hydrogonflables, d'origine naturelle ou synthétique, peuvent absorber jusqu'à plusieurs centaines de fois leur masse en eau. Ils sont donc d'excellents hydrorétenteurs. L'enrobage de matériel végétal avec du polymère hydrogonflable a pour principal intérêt d'optimiser l'utilisation de l'eau et des substances actives associées.

L'enrobage de matériel végétal par du polymère hydrogonflable présente un intérêt par exemple pour les cultures à usage alimentaire, industriel ou ornemental. La totalité du matériel végétal peut être enrobée comme cela est souvent le cas pour des semences. Parfois, il peut n'être enrobé que partiellement comme cela est le cas pour le pralinage de racines de plante ou encore pour l'enrobage de boutures de canne à sucre.

L'enrobage partiel ou total de matériel végétal par du polymère hydrogonflable peut se faire par application du polymère sous forme de poudre, finement broyée. De ce fait, pour une bonne fixation du polymère, la surface du matériel végétal à enrober peut être préalablement recouverte d'un agent de liaison avant application du polymère.

Selon d'autres procédés, le polymère hydrogonflable sous forme de poudre peut être préalablement mélangé à un agent de liaison, par exemple du graphite, avant d'être appliqué à la surface du matériel végétal à enrober.

Une substance singulative peut aussi être utilisée afin d'éviter l'agglomération des matériels végétaux, par exemple des semences, pendant ou postérieurement à leur traitement d'enrobage. Cependant, par ces procédés, la quantité de polymère hydrogonflable appliquée sur la surface à traiter reste faible, généralement moins de 2 % en masse. Et surtout, ces procédés impliquent la manipulation et l'émission de poussières de polymères très fines, dangereuses pour l'opérateur.

Une autre alternative, est de pratiquer l'enrobage du matériel végétal par application du polymère hydrogonflable sous forme de gel. Pour cela, le polymère est partiellement ou totalement hydraté ou hydrogonflé avant son application. L'utilisation d'un agent de liaison est souvent requise. Encore une fois, la quantité de polymère appliquée sur la surface à traiter reste faible. De plus, une étape de séchage est requise sur le produit final si on veut limiter les difficultés de stockage, de transport et d'utilisation du matériel végétal enrobé non séché. Enfin, un tel procédé est difficilement industrialisable.

Une autre méthode pour appliquer le polymère hydrogonflable sur un matériel végétal consiste en une application sous la forme d'une dispersion inverse eau-dans-huile. L'inconvénient majeur de ce procédé est la manipulation de quantités importantes d'hydrocarbures allant de 1 à 10 fois la quantité de polymère. De plus, outre les difficultés de séchage du matériel enrobé impliquées par l'utilisation d'hydrocarbures, ces derniers engendrent des problèmes éco-toxicologiques. Enfin, dans le cas des semences, l'enrobage par du polymère hydrogonflable selon un tel procédé induit des problèmes de coulabilité et de passage dans les semoirs ainsi que l'altération des qualités agronomiques du matériel végétal.

Dans la plupart des procédés utilisés pour appliquer l'enrobage partiel ou total du matériel végétal, le produit fini sous forme sèche, notamment le matériel végétal enrobé par du polymère hydrogonflable, présente une faible résistance à l'abrasion du fait de phénomènes d'attrition. Ainsi, la durabilité de l'enrobage reste faible et l'émission de fines particules de polymère peut aussi être gênante lors de l'utilisation du matériel végétal enrobé. Des exemples connus dans le domaine technique sont représentés par US 4 249 343 A et Snf: "Water retainers for Soil and Substrates",31 janvier 2014.

Les méthodes de l'état de la technique sont donc souvent complexes et peu efficaces. Elles présentent notamment des problèmes d'homogénéité et de quantité de polymère appliqué. Elles conduisent également à des produits sensibles à l'attrition ou à l'abrasion ou bien à des produits dont la coulabilité est insuffisante.

Il est donc nécessaire de disposer de méthodes qui permettent d'apporter des solutions à tout ou partie des problèmes des méthodes de l'état de la technique.

Ainsi, il est nécessaire de disposer de méthodes de traitement de matériel végétal avec des polymères hydrogonflables possédant une forte adhérence avec le matériel végétal ou sous la forme de particules de taille micrométrique.

Ainsi, l'invention fournit un procédé selon la revendication 1.

Pour le procédé selon l'invention, le matériel végétal est préférentiellement un matériel végétal de propagation ou un matériel végétal de reproduction, notamment un matériel végétal choisi parmi, les graines, les boutures, les plantules, les pousses, les racines, les radicelles, les oignons, les rhizomes, les tubercules, les branches, les tiges, les cals, les bourgeons, les fruits et les parties ou éléments partiels de ces matériels végétaux ainsi que les organismes génétiquement modifiés correspondants. Les semences sont le matériel végétal particulièrement préféré.

Pour le procédé selon l'invention, le matériel végétal peut être choisi parmi les plantes de cultures céréalières, les plantes de cultures pseudo-céréalières, les plantes de cultures industrielles, les plantes oléagineuses, les plantes protéagineuses, les plantes saccharifères, les plantes condimentaires, les plantes horticoles, les plantes ornementales, les plantes fourragères, les plantes potagères, les plantes légumineuses, les arbres fruitiers, les agrumes, les vignes, les plantes cultivées pour la production de féculents, les plantes cultivées pour la production d'épices les plantes cultivées pour la production d'agro-carburants, les plantes cultivées pour la production d'au moins un produit choisi parmi coton, lin, papier, textile, bois, caoutchouc, produits ménagers, adhésifs, produits cosmétiques, parfums, produits pharmaceutiques, produits phytopharmaceutiques.

Le polymère (a) est également connu comme polymère super-absorbant. Généralement, il a une capacité d'absorption d'eau supérieure à 10 fois son volume.

Dans le procédé selon l'invention, au sein de la dispersion, le polymère hydrogonflable n'est pas ou peu hydrogonflé. Peu hydrogonflé signifie qu'il garde une capacité d'absorption d'eau supérieure à 10 fois son volume.

Lorsque le polymère est appliqué sur les semences, il n'est pas hydraté (hydrogonflé) en raison de la présence des sels ou agents d'équilibrage.

Le polymère hydrogonflable selon l'invention peut être préparé à partir de différents monomères hydrosolubles, en particulier à partir d'au moins un monomère hydrosoluble comprenant au moins une double liaison éthylénique. Il peut ainsi être préparé à partir d'au moins un monomère anionique, à partir d'au moins un monomère non ionique, à partir d'au moins un monomère cationique ou encore à partir d'au moins un monomère zwitterionique, seuls ou en mélange. De façon générale, les polymères hydrogonflables de l'invention sont obtenus par réticulation et forment donc des réseaux tridimensionnels.

Comme exemples de monomères anioniques, on utilise avantageusement au moins un monomère choisi parmi
- les monomères comprenant au moins une fonction carboxylique, par exemple acide acrylique, acide méthacrylique et leurs sels ;
- les monomères comprenant au moins une fonction acide sulfonique, par exemple l'acide 2-acrylamido-2-méthylpropane sulfonique (AMPS) et ses sels.

Les monomères anioniques préférés sont l'acide acrylique et l'acide 2-acrylamido-2-méthylproprane sulfonique et leurs sels.

Comme exemples de monomères non ioniques, on utilise avantageusement au moins un monomère choisi parmi
- l'acrylamide et ses dérivés, notamment les N-alkylacrylamides, par exemple le N-isopropylacrylamide, le N-tert-butylacrylamide ; les N,N-dialkylacrylamides, par exemple le NN-diméthylacrylamide et le N-méthylolacrylamide;
- le méthacrylamide et ses dérivés, notamment les N-alkylméthacrylamides, par exemple le N-isopropylméthacrylamide, le N-tert-butylméthacrylamide ; les N,N-dialkylméthacrylamides, par exemple le NN-diméthylméthacrylamide et le N-méthylolméthacrylamide ;
- la vinylformamide, la N-vinylpyridine, la N-vinylpyrrolidone, les hydroxyalkyl acrylates, les hydroxyalkyl méthacrylates, les acrylates portant des chaînes alkoxy; les méthacrylates portant des chaînes alkoxy.

Les monomères non ioniques préférés sont l'acrylamide, le méthacrylamide, la N-vinylpyrrolidone.

Comme exemples de monomères cationiques, on utilise avantageusement au moins un monomère choisi parmi
- les sels de diallyldialkyl ammonium, par exemple le chlorure de diallyl dimethyl ammonium (DADMAC) ;
- les acrylates de dialkylaminoalkyle, les methacrylates de dialkylaminoalkyle, en particulier l'acrylate de dialkylaminoalkyle de dialkylaminoéthyle (ADAME) et le méthacrylate de dialkylaminoéthyle (MADAME), ainsi que leurs formes acidifiées ou quaternisées, par exemple le chlorure de [2-(acryloyloxy)ethyl]triméthylammonium ;
- les dialkyl-aminoalkylacrylamides, les dialkyl-methacrylamides, ainsi que leurs formes acidifiées ou quaternisées, par exemple le chlorure d'acrylamido-propyl triméthyl ammonium.

Comme exemples de monomères zwitterioniques, on utilise avantageusement au moins un monomère choisi parmi
- les monomères sulfobétaïnes comme le sulfopropyl diméthylammonium éthyl méthacrylate, le sulfopropyl diméthylammonium propylméthacrylamide, le sulfopropyl 2-vinylpyridinium ;
- les monomères phosphobétaïnes, comme le phosphato éthyl triméthylammonium éthyl méthacrylate les monomères carboxybétaïnes.

De manière avantageuse selon l'invention, le polymère hydrogonflable (a) peut être un co-polymère préparé à partir des monomères précédemment décrits ou à partir des monomères précédemment décrits et d'au moins un autre monomère choisi parmi
- les monomères hydrophobes, par exemple le styrène, les alkyl-acrylates, les alkyl-méthacrylates, les aryl-acrylates, les aryl-méthacrylates, les dérivés hydrophobes d'acrylamide ;
- les monomères amphiphiles, le méthacarylate de dodécyl poly(oxyéthylène)₁₀ ;

Ou à partir de tes polymères naturels tels que par exemples les dérivés cellulosiques, les polysaccharides, les argiles, par exemple ces polymères naturels peuvent être greffés sur les polymères hydrogonflables de l'invention pour former une autre famille de polymères hydrogonflables selon l'invention.

De manière préférée, le polymère hydrogonflable (a) est un copolymère d'au moins un monomère non-ionique et d'au moins un monomère anionique.

De manière également préférée, la dispersion aqueuse comprend de 5 à 60 % en masse, de préférence de 15 à 35 % en masse, de polymère hydrogonflable.

Pour le procédé selon l'invention, les particules de polymère hydrogonflable (a) ont de façon avantageuse un diamètre permettant leur dispersion. De préférence, les particules présentent un diamètre moyen allant de 0,1 et 1 000 µm, plus préférentiellement allant de 0,1 et 200 µm, encore plus préférentiellement allant de 0,1 et 20 µm. Le diamètre moyen des particules peur être déterminé par toute méthode connue de l'homme du métier, par exemple par microscopie binoculaire.

Outre le polymère hydrogonflable (a), la dispersion aqueuse comprend un composé (b) qui a une fonction d'agent d'équilibrage. Il s'agit d'un composé hydrosoluble ou miscible à l'eau. Au sein de la dispersion selon l'invention, il permet d'inhiber totalement ou partiellement la capacité d'hydrogonflage du polymère (a). Ainsi, au sein de cette dispersion aqueuse, en présence de ce composé (b), le polymère hydrogonflable (a) est présent sous forme de particules et n'est pas ou peu à l'état hydrogonflé.

De manière préférée, la dispersion aqueuse comprend au moins un composé (b) choisi parmi les sels minéraux ou organiques comprenant au moins un anion choisi parmi les sulfates, les dihydrogénophosphates, les phosphates, les halogénures.

De manière également préférée, la dispersion aqueuse comprend au moins un composé (b) choisi parmi les sels minéraux ou organiques comprenant au moins un cation choisi parmi le sodium, le potassium, l'ammonium, le magnésium, le calcium, l'aluminium.

La dispersion aqueuse peut également comprendre au moins un composé (b) sous la forme d'un mélange d'au moins deux de ces sels minéraux ou organiques comprenant au moins un anion et au moins un cation.

De manière préférée, la dispersion comprend, comme composé (b), de 5 à 45 % en masse, de préférence de 8 à 27 % en masse, de sel minéral ou de sel organique.

Le composé (b) peut également être choisi parmi les polymères organiques dispersants tels que les polymères et les co-polymères anioniques, non ioniques, cationiques ou amphotères. Préférentiellement, il est choisi parmi les polymères organiques dispersants issus d'au moins un monomère choisi parmi les monomères comprenant au moins une double liaison éthylénique.

Pour la préparation du composé (b), les monomères comprenant au moins une double liaison éthylénique peuvent être choisis parmi les monomères anioniques. Comme exemples de monomères anioniques, on peut citer
- les monomères comprenant au moins une fonction carboxylique, notamment acide acrylique, acide méthacrylique et leurs sels ;
- les monomères comprenant au moins une fonction acide sulfonique, notamment l'acide 2-acrylamido-2-méthylpropane sulfonique (AMPS) et ses sels.

Pour la préparation du composé (b), les monomères comprenant au moins une double liaison éthylénique peuvent être choisis parmi les monomères non ioniques. Comme exemples de monomères non ioniques, on peut citer
- l'acrylamide et ses dérivés, tels les N-alkylacrylamides, notamment le N-isopropylacrylamide, le N-tert-butylacrylamide ; les N,N-dialkylacrylamides, notamment le NN-diméthylacrylamide et le N-méthylolacrylamide ;
- le méthacrylamide et ses dérivés, tels les N-alkylméthacrylamides, notamment le N-isopropylméthacrylamide, le N-tert-butylméthacrylamide ; les N,N-dialkylméthacrylamides, notamment le NN-diméthylméthacrylamide et le N-méthylolméthacrylamide ;
- la vinylformamide, la N-vinylpyridine, la N- vinylpyrrolidone, les hydroxyalkyl acrylates, les hydroxyalkyl méthacrylates, les acrylates portant des chaînes alkoxy; les méthacrylates portant des chaînes alkoxy.

Pour la préparation du composé (b), les monomères comprenant au moins une double liaison éthylénique peuvent être choisis parmi les monomères cationiques. Comme exemples de monomères cationiques, on peut citer
- les sels de diallyldialkyl ammonium, notamment le chlorure de diallyl dimethyl ammonium (DADMAC) ;
- les acrylates de dialkylaminoalkyle, les methacrylates de dialkylaminoalkyle, en particulier l'acrylate de dialkylaminoalkyle de dialkylaminoéthyle (ADAME) et le méthacrylate de dialkylaminoéthyle (MADAME), ainsi que leurs formes acidifiées ou quaternisées ; par exemple le chlorure de [2-(acryloyloxy)ethyl]triméthylammonium.
- les dialkyl-aminoalkylacrylamides, les dialkyl-methacrylamides, ainsi que leurs formes acidifiées ou quaternisées, par exemple le chlorure d'acrylamido-propyl triméthyl ammonium.

Pour la préparation du composé (b), les monomères comprenant au moins une double liaison éthylénique peuvent être choisis parmi les monomères zwitterioniques. Comme exemples de monomères zwitterioniques, on peut citer
- les monomères sulfobétaïnes comme le sulfopropyl diméthylammonium éthyl méthacrylate, le sulfopropyl diméthylammonium propylméthacrylamide, le sulfopropyl 2-vinylpyridinium ;
- les monomères phosphobétaïnes, comme le phosphato éthyl triméthylammonium éthyl méthacrylate les monomères carboxybétaïnes.

De manière préférée, la dispersion aqueuse comprend au moins un composé (b) choisi parmi les polymères ou les copolymères à base d'acide acrylique, d'acide 2-acrylamido-2-méthylpropane sulfonique et leurs sels et d'acrylamide.

Les polymères dispersants particulièrement préférés sont des polymères anioniques, amphotères obtenus à partir de l'acide 2-acrylamido-2-méthyl-1-propane sulfonique (AMPS) ou de ses sels ou à partir de l'acide acrylique ou de ses sels ou encore à partir de l'acide méthacrylique ou de ses sels ainsi que les copolymères obtenus à partir de ces monomères.

De manière également préférée, la dispersion aqueuse comprend au moins un composé (b) choisi parmi les polymères organiques dispersants de poids moléculaire allant de 500 à 100 000 g.mol⁻¹, de préférence allant de 1 000 à 50 000 g.mol⁻¹ ; plus préférentiellement allant de 1 000 à 30 000 g.mol⁻¹.

De manière préférée, la dispersion comprend, comme composé (b), moins de 30 % en masse, de préférence de 5 à 20 % en masse, de polymère organique dispersant.

Selon l'invention, la dispersion peut également comprendre au moins un additif choisi parmi les alcools polyfonctionnels, par exemple le glycérol, le polyéthylèneglycol et le polypropylèneglycol ; les éthers de polyalkylène. Avantageusement, l'additif est présent en une quantité en masse de dispersion allant de 0,001 à 20 % en poids, préférentiellement de 0,5 à 10 %

Le procédé selon l'invention comprend l'application de la dispersion aqueuse sur tout ou partie de la surface du matériel végétal. Cette application peut être réalisée par différentes techniques. L'application peut notamment être réalisée par enrobage, trempage, pulvérisation ou pralinage du matériel végétal.

Lors de sa mise en œuvre par le procédé selon l'invention, la dispersion aqueuse peut également comprendre au moins une substance d'intérêt agronomique ou au moins une substance permettant d'améliorer le développement ou la croissance du matériel végétal. De manière préférée, cette substance est choisie parmi les fertilisants, les hormones, les micro-organismes, les mycorhizes, les stimulateurs de croissance, les régulateurs de croissance, les produits phytosanitaires, par exemples les fongicides, les insecticides, les phytoprotecteurs.

Une telle substance supplémentaire peut donc être présente au sein de la dispersion aqueuse. Elle peut également être appliquée séparément. Ainsi, le procédé selon l'invention peut également comprendre l'application d'au moins une substance d'intérêt agronomique ou d'au moins une substance permettant d'améliorer le développement ou la croissance du matériel végétal. De préférence, cette substance est choisie parmi les fertilisants, les hormones, les micro-organismes, les mycorhizes, les stimulateurs de croissance, les régulateurs de croissance, les produits phytosanitaires, par exemples les fongicides, les insecticides, les phytoprotecteurs, antérieurement, simultanément ou postérieurement à l'application de la dispersion sur le matériel végétal.

Outre l'application de la dispersion aqueuse, le procédé selon l'invention peut également comprendre l'application sur le matériel végétal d'un agent de liaison, antérieurement ou simultanément à l'application de la dispersion aqueuse de l'invention sur le matériel végétal. De préférence, cet agent de liaison est choisi parmi les alcools polyvinyliques (PVOH), les acétates polyvinyliques (PVAc), les polyacrylamides, les polyacrylates, les polyméthacrylates, les copolymères acrylamide/acrylate, les copolymères acrylamide/méthacrylate, les polyvinylpyrrolidones (PVP), les copolymères vinylpyrrolidone/dimethylaminoéthylméthacrylate, les copolymères vinylpyrrolidone/styrène, copolymères vinylpyrrolidone/vinylacetate, les dérivés cellulosiques, les gommes naturelles, les argiles, le graphite, le talc, la silice.

Le procédé selon l'invention peut également comprendre l'application sur le matériel végétal d'un agent filmogène ou de pelliculage, simultanément ou postérieurement à l'application de la dispersion sur le matériel végétal. De préférence, cet agent filmogène ou de pelliculage est choisi parmi les polyvinylpyrrolidones (PVP), les copolymères vinylpyrrolidone/styrène, copolymères vinylpyrrolidone/vinylacétate, les copolymères vinylpyrrolidone/diméthylaminoéthylméthacrylate, les polyacrylamides, les copolymères acrylamide/acrylate, les copolymères acrylamide/méthacrylate, les copolymères méthylvinyléther/anhydride maléique, les polyuréthanes, les alcools polyvinyliques, polyvinylacétates, les dérivés cellulosiques, les alginates, les gommes naturelles.

De manière avantageuse, le procédé selon l'invention peut également comprendre la préparation préalable de la dispersion aqueuse comprenant
(a) les particules d'au moins un polymère hydrogonflable ;
(b) au moins un composé choisi parmi un sel minéral, un sel organique, un polymère organique dispersant et leurs mélanges,
par polymérisation du polymère hydrogonflable directement dans une solution aqueuse comprenant au moins un composé choisi parmi un sel minéral, un sel organique, un polymère organique dispersant et leurs mélanges (cette technique est appelée polymérisation en dispersion aqueuse) ; ou par simple mélange des composés a) et b) ; de préférence par polymérisation en dispersion aqueuse. La polymérisation en dispersion aqueuse se fait par les techniques connues de l'homme du métier.

De manière également avantageuse, le procédé selon l'invention peut également comprendre le séchage du matériel végétal suite à l'application de la dispersion.

L'invention concerne un procédé de traitement d'un matériel végétal au moyen d'une dispersion aqueuse.

Les caractéristiques particulières, avantageuses ou préférées du procédé selon l'invention définissent un matériel végétal particulier, avantageux ou préféré.

L'invention concerne également l'utilisation du matériel végétal préparé selon l'invention pour la culture d'une plante issue de ce matériel végétal. Les caractéristiques particulières, avantageuses ou préférées du procédé selon l'invention définissent une utilisation particulière, avantageuse ou préférée.

Les différents aspects de l'invention sont illustrés par les exemples qui suivent.

### EXEMPLES

### Tableau des compositions mises en oeuvre dans les différents exemples

| **Composition** | **Description** |
|---|---|
| **A (comparative)** | Mélange contenant 33% massique d'un polymère hydrogonflable sous forme de poudre d'acrylamide et d'acrylate de sodium réticulé, de granulométrie inférieur à 200µm, et 67% massique de poudre fine de graphite. Le graphite micronisé est agent de liaison non aqueux. |
| **B (selon l'invention)** | Dispersion aqueuse contenant 25 % massique d'un polymère hydrogonflable d'acrylamide et d'acrylate de sodium réticulé, de granulométrie inférieure à 15 µm. Cette dispersion aqueuse contient un total de 43 % massique de matière sèche, dont le polymère hydrogonflable, du sulfate d'ammonium et des polymères dispersants. |
| **C (comparative)** | Mélange contenant 99.35 % massique d'eau et 0,65 % massique d'un polymère hydrogonflable sous la forme d'une poudre de copolymère d'acrylamide et d'acrylate de sodium réticulé et préalablement tamisé à 200 µm à l'état sec (sa capacité d'absorption massique est de 150 fois dans cette eau). Dans cette composition le polymère hydrogonflable est totalement hydraté dans un léger excès d'eau. |
| **D (comparative)** | Composition contenant les mêmes ingrédients que la composition C mais le polymère hydrogonflable n'est ici hydraté que partiellement. La composition contient 99 % d'eau et 1 % de polymère hydrogonflable (massique). |
| **E (comparative)** | Polymère hydrogonflable d'acrylamide et d'acrylate de sodium réticulé sous la forme d'une émulsion inverse eau dans huile. L'émulsion contient 30 % de polymère hydrogonflable. |

### Exemple 1 :

**Cas 1)** 0,5 g de la composition A est appliqué sur 50 g de semences de blé tendre, selon un ratio massique de 1 :100. Afin d'éviter une exposition dangereuse aux poussières, l'application est réalisée sous hotte aspirante, dans un tambour rotatif en inox de diamètre 20 cm, puis le produit final (semences enrobées de la composition A) subit une étape de séchage 5 minutes à 40°C.
**Cas 2)** 11,6 g de la composition B sont appliqués sur 50 g de semences de blé tendre, selon un ratio matière sèche de la composition: semences de 1:10. Le procédé d'application est le même que décrit dans le cas 1.

Dans chaque cas, pour évaluer la qualité de l'adhésion des compositions sur les semences, l'ensemble du mélange obtenu est placé sur un tamis de maille 300µm, soumis à une vibration d'amplitude 1,5 mm/ "g" (1g=9,81m/s²) pendant 1 minute (tamiseur AS 200 control de la marque Retsch), afin de générer attrition et abrasion. Le taux de particules fines libres est déduit de la quantité passant à travers le tamis de 300 µm par rapport à la masse de polymère hydrogonflable initialement appliquée (matière sèche)

### Résultats :

| | Masse de polymère hydrogonflable appliquée (g) | Taux de fines libres (%) |
|---|---|---|
| Cas 1 | 0,165 | 75 |
| Cas 2 | 2,9 | 0,8 |

Selon le procédé de l'invention (cas 2), il est possible d'appliquer, de manière plus sûre, de plus grandes quantités de polymère hydrogonflable tout en obtenant de meilleures propriétés d'adhésion de l'enrobage sur les semences que selon le procédé du cas 1.

### Exemple 2 :

**Cas 1)** 50 g de composition C sont appliqués sur 50 g de semences de blé tendre dans un tambour rotatif en inox de 20 cm de diamètre. Ensuite, le système requiert un séchage minimum de 25 min à 40°C afin d'obtenir un enrobage sec. A la fin du procédé, par observation visuelle, le taux de recouvrement de surface des graines par le produit d'enrobage est estimé inférieur à 5%.
**Cas 2)** 50 g de composition D sont appliqués sur 50 g de semences de blé tendre dans un tambour rotatif en inox de 20cm de diamètre. Ensuite, le système requiert un séchage minimum de 20 min à 40°C afin d'obtenir un enrobage sec. A la fin du procédé, par observation visuelle, le taux de recouvrement de surface des graines par le produit d'enrobage est estimé inférieur à 10%.
**Cas 3)** 50 g de semences sont traitées avec la composition B de manière identique à l'exemple 1, cas 2., soit 11,6 g de la composition B. A la fin du procédé, par observation visuelle, le taux de recouvrement des graines par le produit d'enrobage est estimé comme étant supérieur à 90 %.

En comparaison, les procédés d'enrobage des cas 1) et 2) sont beaucoup plus contraignants pour l'homme de l'art, car ils nécessitent la manipulation de grands volumes de composition C et D et impliquent une étape de séchage particulièrement longue pour éliminer la grande quantité d'eau utilisée. De plus, la quantité finale de polymère appliquée est faible comparativement au produit obtenu dans le cas 3) représentatif du procédé de l'invention.

### Exemple 3 :

**Cas 1)** 50 g de semences de blé tendre sont traités avec 1% massique de composition E. L'application est réalisée dans un tambour rotatif en inox de diamètre 20 cm et le produit subit une étape de séchage 10 min/40°C.
**Cas 2)** 50 g de semences de blé tendre sont traités avec 1% massique de composition B, selon les mêmes étapes que décrites dans le cas 1.
**Cas 3)** 50 g de semences de blé tendre sont traités avec 6% massique de composition E selon les mêmes étapes que décrites dans le cas 1.
**Cas 4)** 50 g de semences de blé tendre sont traités avec 6% massique de composition B selon les mêmes étapes que décrites dans le cas 1.

La coulabilité des semences traitées est testée à l'aide d'un cône d'orifice inférieur de diamètre 1,5 cm. Les semences sont initialement chargées dans le cône. L'orifice inférieur est initialement fermé lors du chargement puis ouvert à l'instant to afin d'évaluer la capacité des graines à s'écouler au travers. Le test est considéré comme un succès lorsque la totalité du chargement s'est écoulé au travers de l'orifice après to + 30 secondes.

### Résultats :

| | taux de succès du test* |
|---|---|
| Cas 1 | 65% |
| Cas 2 | 90% |
| Cas 3 | 0% |
| Cas 4 | 35% |

| | |
|---|---|
| *Pour chaque cas, une moyenne sur 20 tests est calculée | |

A dosage équivalent en composition d'enrobage, la coulabilité des semences traitées selon la méthode de l'invention (Cas 2 et 4) est significativement meilleure que dans les cas 1 et 3, ce qui constitue un avantage certain pour l'homme de l'art.

## Revendications

1. Procédé de traitement d'un matériel végétal comprenant l'application sur tout ou partie de la surface du matériel végétal d'une dispersion aqueuse comprenant
(a) des particules d'au moins un polymère hydrogonflable sous forme non hydrogonflé ou sous une forme dans laquelle il garde une capacité d'absorption d'eau supérieure à 10 fois son volume;
(b) au moins un agent d'équilibrage choisi parmi un sel minéral, un sel organique, un polymère organique dispersant et leurs mélanges.

2. Procédé selon la revendication 1 pour lequel le matériel végétal est un matériel végétal de propagation ou un matériel végétal de reproduction, notamment un matériel végétal choisi parmi les semences, les graines, les boutures, les plantules, les pousses, les racines, les radicelles, les oignons, les rhizomes, les tubercules, les branches, les tiges, les cals, les bourgeons, les fruits et les parties ou éléments partiels de ces matériels végétaux ainsi que les organismes génétiquement modifiés correspondants.

3. Procédé selon l'une des revendications précédentes pour lequel le polymère hydrogonflable est issu d'au moins un monomère choisi parmi les monomères hydrosolubles comprenant au moins une double liaison éthylénique, de préférence un monomère choisi parmi:
• les monomères anioniques, avantageusement choisis parmi
∘ les monomères comprenant au moins une fonction carboxylique, par exemple acide acrylique, acide méthacrylique et leurs sels ;
∘ les monomères comprenant au moins une fonction acide sulfonique, par exemple l'acide 2-acrylamido-2-méthylpropane sulfonique (AMPS) et ses sels ;
∘ les monomères non ioniques, avantageusement choisis parmi
∘ l'acrylamide et ses dérivés, notamment les N-alkylacrylamides, par exemple le N-isopropylacrylamide, le N-tert-butylacrylamide ; les N,N-dialkylacrylamides, par exemple le NN-diméthylacrylamide et le N-méthylolacrylamide ;
∘ le méthacrylamide et ses dérivés ;
∘ la vinylformamide, la N-vinylpyridine, la N- vinylpyrrolidone, les hydroxyalkyl acrylates, les hydroxyalkyl méthacrylates, les acrylates portant des chaînes Ikoxy; les méthacrylates portant des chaînes alkoxy ;
• les monomères cationiques, de préférence choisis parmi
∘ les sels de diallyldialkyl ammonium, par exemple le chlorure de diallyl dimethyl ammonium (DADMAC) ;
o les acrylates de dialkylaminoalkyle, les methacrylates de dialkylaminoalkyle, en particulier l'acrylate de dialkylaminoalkyle de dialkylaminoéthyle (ADAME) et le méthacrylate de dialkylaminoéthyle (MADAME), ainsi que leurs formes acidifiées ou quaternisées ;
∘ les dialkyl-aminoalkylacrylamides, les dialkyl-methacrylamides, ainsi que leurs formes acidifiées ou quaternisées, par exemple le chlorure d'acrylamido-propyl triméthyl ammonium ;
• les monomères zwitterioniques, par exemple choisis parmi
∘ les monomères sulfobétaïnes comme le sulfopropyl diméthylammonium éthyl méthacrylate, le sulfopropyl diméthylammonium propylméthacrylamide, le sulfopropyl 2-vinylpyridinium ;
∘ les monomères phosphobétaïnes, comme le phosphato éthyl triméthylammonium éthyl méthacrylate les monomères carboxybétaïnes.

4. Procédé selon l'une des revendications précédentes pour lequel les particules de la dispersion aqueuse ont un diamètre moyen allant de 0,1 et 1 000 µm, de préférence allant de 0,1 et 200 µm, plus préférentiellement allant de 0,1 et 20 µm.

5. Procédé selon l'une des revendications précédentes pour lequel la dispersion comprend de 5 à 60 % en masse, de préférence de 15 à 35 % en masse, de polymère hydrogonflable.

6. Procédé selon l'une des revendications précédentes pour lequel la dispersion comprend au moins un composé (b) choisi parmi
• les sels minéraux ou organiques comprenant au moins un anion choisi parmi les sulfates, les dihydrogénophosphates, les phosphates, les halogénures ; ou
• les sels minéraux ou organiques comprenant au moins un cation choisi parmi le sodium, le potassium, l'ammonium, le magnésium, le calcium, l'aluminium ; ou
• les mélanges d'au moins deux de ces sels ; ou
• les polymères organiques dispersants choisis parmi les polymères de poids moléculaire allant de 500 à 100 000 g.mol-¹, de préférence allant de 1 000 à 50 000 g.mol⁻¹ ; plus préférentiellement allant de 1000 à 30 000 g.mol-¹ ou
• les polymères organiques dispersants choisis parmi les polymères et les copolymères anioniques, cationiques ou amphotères, de préférence les polymères organiques dispersants issus d'au moins un monomère choisi parmi les monomères comprenant au moins une double liaison éthylénique, de préférence les monomères choisis parmi:
∘ les monomères anioniques, avantageusement choisis parmi
▪ les monomères comprenant au moins une fonction carboxylique, par exemple acide acrylique, acide méthacrylique et leurs sels ;
▪ les monomères comprenant au moins une fonction acide sulfonique, par exemple l'acide 2-acrylamido-2-méthylpropane sulfonique (AMPS) et ses sels ;
▪ les monomères non ioniques, avantageusement choisis parmi
▪ l'acrylamide et ses dérivés, notamment les N-alkylacrylamides, par exemple le N-isopropylacrylamide, le N-tert-butylacrylamide ; les N,N-dialkylacrylamides, par exemple le NN-diméthylacrylamide et le N-méthylolacrylamide;
▪ le méthacrylamide et ses dérivés;
▪ la vinylformamide, la N-vinylpyridine, la N- vinylpyrrolidone, les hydroxyalkyl acrylates, les hydroxyalkyl méthacrylates, les acrylates portant des chaînes alkoxy; les méthacrylates portant des chaînes alkoxy ;
∘ les monomères cationiques, de préférence choisis parmi
▪ les sels de diallyldialkyl ammonium, par exemple le chlorure de diallyl dimethyl ammonium (DADMAC) ;
▪ les acrylates de dialkylaminoalkyle, les methacrylates de dialkylaminoalkyle, en particulier l'acrylate de dialkylaminoalkyle de dialkylaminoéthyle (ADAME) et le méthacrylate de dialkylaminoéthyle (MADAME), ainsi que leurs formes acidifiées ou quaternisées;
▪ les dialkyl-aminoalkylacrylamides, les dialkyl-methacrylamides, ainsi que leurs formes acidifiées ou quaternisées, par exemple l'acrylamido-propyl triméthyl ammonium chlorure, le methacrylamido-propyl triméthyl ammonium chlorure ;
∘ les monomères zwitterioniques, par exemple choisis parmi
▪ les monomères sulfobétaïnes comme le sulfopropyl diméthylammonium éthyl méthacrylate, le sulfopropyl diméthylammonium propylméthacrylamide, le sulfopropyl 2-vinylpyridinium;
▪ les monomères phosphobétaïnes, comme le phosphato éthyl triméthylammonium éthyl méthacrylate les monomères carboxybétaïnes ; ou
• les polymères ou les copolymères à base d'acide acrylique, d'acide 2-acrylamido-2-méthylpropane sulfonique et leurs sels et d'acrylamide.

7. Procédé selon l'une des revendications précédentes pour lequel la dispersion comprend
• de 5 à 45 % en masse, de préférence de 8 à 27 % en masse, de sel minéral ou de sel organique ; ou
• moins de 30 % en masse, de préférence de 5 à 20 % en masse, de polymère organique dispersant.

8. Procédé selon l'une des revendications précédentes pour lequel l'application de la dispersion sur le matériel végétal est réalisée par enrobage, trempage, pulvérisation ou pralinage.

9. Procédé selon l'une des revendications précédentes pour lequel la dispersion comprend également au moins une substance d'intérêt agronomique ou au moins une substance permettant d'améliorer le développement ou la croissance du matériel végétal, de préférence une substance choisie parmi les fertilisants, les hormones, les micro-organismes, les mycorhizes, les stimulateurs de croissance, les régulateurs de croissance, les produits phytosanitaires, par exemples les fongicides, les insecticides, les phytoprotecteurs.

10. Procédé selon l'une des revendications précédentes comprenant également
• l'application d'un agent de liaison, de préférence choisi parmi les alcools polyvinyliques (PVOH), les acétates polyvinyliques (PVAc), les polyacrylamides, polyacrylates, les polyméthacrylates, les copolymères acrylamide/acrylate, les copolymères acrylamide/méthacrylate, les polyvinylpyrrolidones (PVP), les copolymères vinylpyrrolidone/dimethylaminoéthylméthacrylate, les copolymères vinylpyrrolidone/styrène, les copolymères vinylpyrrolidone/vinylacetate, les dérivés cellulosiques, les gommes naturelles, les argiles, le graphite, le talc, la silice, antérieurement ou simultanément à l'application de la dispersion sur le matériel végétal ; ou
• l'application d'un agent filmogène ou pelliculant, de préférence choisi parmi les polyvinylpyrrolidones (PVP), les copolymères vinylpyrrolidone/styrène, copolymères les vinylpyrrolidone/vinylacétate, les copolymères vinylpyrrolidone/diméthylaminoéthylméthacrylate, les polyacrylamides, les copolymères acrylamide/acrylate, les copolymères acrylamide/méthacrylate, copolymères méthylvinyléther/anhydride maléique, les polyuréthanes, les alcools polyvinyliques, les polyvinylacétates, les dérivés cellulosiques, les alginates, les gommes naturelles, simultanément ou postérieurement à l'application de la dispersion sur le matériel végétal ; ou
• l'application d'au moins une substance d'intérêt agronomique ou d'au moins une substance permettant d'améliorer le développement ou la croissance du matériel végétal, de préférence choisie parmi les fertilisants, les hormones, les micro-organismes, les mycorhizes, les stimulateurs de croissance, les régulateurs de croissance, les produits phytosanitaires, par exemples les fongicides, les insecticides, les phytoprotecteurs, antérieurement, simultanément ou postérieurement à l'application de la dispersion sur le matériel végétal.

11. Procédé selon l'une des revendications précédentes comprenant également
• la préparation préalable de la dispersion aqueuse comprenant
(a) les particules d'au moins un polymère hydrogonflable sous forme peu ou pas hydrogonflé;
(b) au moins un composé agent d'équilibrage choisi parmi un sel minéral, un sel organique, un polymère organique dispersant et leurs mélanges ; ou comprenant également,
par polymérisation du polymère hydrogonflable directement dans une solution aqueuse comprenant au moins un composé agent d'équilibrage choisi parmi un sel minéral, un sel organique, un polymère organique dispersant et leurs mélanges; ou par simple mélange des composés a) et b) ;
• le séchage du matériel végétal suite à l'application de la dispersion.

12. Utilisation du matériel végétal préparé selon le procédé d'une des revendications 1 à 11, pour la culture d'une plante issue de ce matériel végétal.

## Patentansprüche

1. Verfahren zur Behandlung eines Pflanzenmaterials, umfassend das Aufbringen einer wässrigen Dispersion auf die gesamte oder einen Teil der Oberfläche des Pflanzenmaterials, umfassend
(a) Partikel mindestens eines wasserquellbaren Polymers in nicht hydrierter Form oder in einer Form, in der es eine Wasserabsorptionskapazität von mehr als dem Zehnfachen seines Volumens beibehält;
(b) mindestens ein Ausgleichsmittel, ausgewählt aus einem anorganischen Salz, einem organischen Salz, einem organischen Dispersionspolymer und deren Gemischen.

2. Verfahren nach Anspruch 1, wobei das Pflanzenmaterial ein Vermehrungspflanzenmaterial oder reproduktives Pflanzenmaterial ist, insbesondere ein Pflanzenmaterial, das ausgewählt ist aus Saatgut, Samen, Stecklingen, Sämlingen, Sprossen, Wurzeln, Wurzelfasern, Zwiebeln, Rhizomen, Knollen, Ästen, Stämmen, Schwielen, Knospen, Früchten und Teilen oder Teilelementen dieser Pflanzenmaterialien sowie den entsprechenden genetisch veränderten Organismen.

3. Verfahren nach einem der vorherigen Ansprüche, wobei das wasserquellbare Polymer von mindestens einem Monomer stammt, das aus wasserlöslichen Monomeren ausgewählt ist, umfassend mindestens eine ethylenische Doppelbindung umfassen, vorzugsweise ein Monomer, ausgewählt aus:
• anionischen Monomeren, vorteilhafterweise ausgewählt aus
∘ den Monomeren, umfassend mindestens eine Carboxylfunktion, zum Beispiel Acrylsäure, Methacrylsäure und deren Salze;
∘ den Monomeren, umfassend mindestens eine Sulfonsäurefunktion, zum Beispiel 2-Acrylamido-2-methylpropansulfonsäure (AMPS) und ihre Salze;
∘ den nichtionischen Monomeren, vorteilhafterweise ausgewählt aus
∘ dem Acrylamid und seinen Derivaten, insbesondere N-Alkylacrylamide, zum Beispiel N-Isopropylacrylamid, N-tert-Butylacrylamid; N,N-Dialkylacrylamide, zum Beispiel NN-Dimethylacrylamid und N-Methylolacrylamid;
∘ dem Methacrylamid und seinen Derivaten;
∘ dem Vinylformamid, dem N-Vinylpyridin, dem N-Vinylpyrrolidon, den Hydroxyalkylacrylaten, den Hydroxyalkylmethacrylaten, Acrylaten, die Alkoxy-Ketten tragen; den Methacrylaten, die Alkoxy-Ketten tragen;
• den kationischen Monomeren, vorzugsweise ausgewählt aus
∘ den Salzen von Diallyldialkylammonium, zum Beispiel Diallyldimethylammoniumchlorid (DADMAC);
∘ den Acrylaten von Dialkylaminoalkyl, den Methacrylaten von
∘ Dialkylaminoalkyl, insbesondere Dialkylaminoalkyldialkylaminoethylacrylat (ADAME) und Dialkylaminoethylmethacrylat (MADAME), sowie deren angesäuerte oder quaternisierte Formen;
∘ den Dialkyl-Aminoalkylacrylamiden, den Dialkyl-Methacrylamiden sowie ihre angesäuerten oder quaternisierten Formen, zum Beispiel Acrylamido-Propyltrimethylammoniumchlorid;
• den zwitterionischen Monomeren, zum Beispiel ausgewählt aus
∘ den Sulfobetainmonomeren, wie z. B. Sulfopropyldimethylammoniumethylmethacrylat, Sulfopropyldimethylammoniumpropylmethacrylamid, Sulfopropyl-2-vinylpyridinium;
∘ den Phosphobetainmonomeren, wie z. B. Phosphatoethyltrimethylammoniumethylmethacrylat-Carboxybetainmonomere.

4. Verfahren nach einem der vorherigen Ansprüche, wobei die Teilchen der wässrigen Dispersion einen durchschnittlichen Durchmesser von 0,1 bis 1000 µm, vorzugsweise von 0,1 bis 200 µm, noch bevorzugter von 0,1 bis 20 µm, aufweisen.

5. Verfahren nach einem der vorherigen Ansprüche, wobei die Dispersion 5 bis 60 Gewichtsprozent, vorzugsweise 15 bis 35 Gewichtsprozent, eines wasserquellbaren Polymers umfasst.

6. Verfahren nach einem der vorherigen Ansprüche, wobei die Dispersion mindestens eine Verbindung (b) umfasst, die ausgewählt ist aus
• den anorganischen oder organischen Salzen, umfassend mindestens ein Anion, ausgewählt aus Sulfaten, Dihydrogenphosphaten, Phosphaten, Halogeniden; oder
• den anorganischen oder organischen Salzen, umfassend mindestens ein Kation, ausgewählt aus Natrium, Kalium, Ammonium, Magnesium, Calcium und Aluminium; oder
• Gemischen aus zwei oder mehreren dieser Salze oder
• den organischen Dispergiermittelpolymeren, ausgewählt aus Polymeren mit einem Molekulargewicht von 500 bis 100.000 g.mol-¹, vorzugsweise von 1000 bis 50.000 g.mol⁻¹, besonders bevorzugt von 1000 bis 30.000 g.mol⁻¹ oder
• den organischen Dispergiermittelpolymeren, ausgewählt aus anionischen, kationischen oder amphoteren Polymeren und Copolymeren, vorzugsweise organischen Dispergiermittelpolymeren, die von mindestens einem Monomer stammen, das ausgewählt ist aus Monomeren, die mindestens eine ethylenische Doppelbindung enthalten, vorzugsweise Monomere, ausgewählt aus:
∘ anionischen Monomeren, vorteilhafterweise ausgewählt aus
▪ den Monomeren, umfassend mindestens eine Carboxylfunktion, zum Beispiel Acrylsäure, Methacrylsäure und deren Salze;
▪ den Monomeren, umfassend mindestens eine Sulfonsäurefunktion, zum Beispiel 2-Acrylamido-2-methylpropansulfonsäure (AMPS) und ihre Salze;
▪ den nichtionischen Monomeren, vorteilhafterweise ausgewählt aus
▪ dem Acrylamid und seinen Derivaten, insbesondere N-Alkylacrylamide, zum Beispiel N-Isopropylacrylamid, N-tert-Butylacrylamid; N,N-Dialkylacrylamide, zum Beispiel NN-Dimethylacrylamid und N-Methylolacrylamid;
▪ dem Methacrylamid und seinen Derivaten;
▪ dem Vinylformamid, dem N-Vinylpyridin, dem N-Vinylpyrrolidon, den Hydroxyalkylacrylaten, den Hydroxyalkylmethacrylaten, Acrylaten, die Alkoxy-Ketten tragen; den Methacrylaten, die Alkoxy-Ketten tragen;
∘ den kationischen Monomeren, vorzugsweise ausgewählt aus
▪ den Salzen von Diallyldialkylammonium, zum Beispiel Diallyldimethylammoniumchlorid (DADMAC);
▪ den Dialkylaminoalkylacrylaten, den Dialkylaminoalkylmethacrylaten, insbesondere Dialkylaminoalkyldialkylaminoethylacrylat (ADAME) und Dialkylaminoethylmethacrylat (MADAME), sowie deren angesäuerte oder quaternisierte Formen;
▪ den Dialkylaminoalkylacrylamiden, den Dialkylmethacrylamide sowie deren angesäuerte oder quaternisierte Formen, zum Beispiel Acrylamidopropyltrimethylammoniumchlorid, Methacrylamidopropyltrimethylammoniumchlorid;
∘ den zwitterionischen Monomeren, zum Beispiel ausgewählt aus
▪ den Sulfobetainmonomeren, wie z. B. Sulfopropyldimethylammoniumethylmethacrylat, Sulfopropyldimethylammoniumpropylmethacrylamid, Sulfopropyl-2-vinylpyridinium;
▪ den Phosphobetainmonomeren, wie z. B. Phosphatoethyltrimethylammoniumethylmethacrylat-Carboxybetainmonomere; oder
• den Polymeren oder Copolymeren auf der Basis von Acrylsäure, 2-Acrylamido-2-methylpropansulfonsäure und deren Salzen sowie Acrylamid.

7. Verfahren nach einem der vorherigen Ansprüche, wobei die Dispersion Folgendes umfasst
• 5 bis 45 Gewichtsprozent, vorzugsweise 8 bis 27 Gewichtsprozent, Mineralsalz oder organisches Salz; oder
• weniger als 30 Gewichtsprozent, vorzugsweise 5 bis 20 Gewichtsprozent, eines dispergierenden organischen Polymers.

8. Verfahren nach einem der vorherigen Ansprüche, wobei das Aufbringen der Dispersion auf das Pflanzenmaterial durch Beschichten, Tauchen, Besprühen oder Einschlämmen erfolgt.

9. Verfahren nach einem der vorherigen Ansprüche, wobei die Dispersion auch mindestens eine Substanz von agronomischem Interesse oder mindestens eine Substanz zur Verbesserung der Entwicklung oder des Wachstums des Pflanzenmaterials enthält, vorzugsweise eine Substanz ausgewählt aus Düngemitteln, Hormonen, Mikroorganismen, Mykorrhizen, Wachstumsstimulatoren, Wachstumsregulatoren, Pflanzenschutzprodukten, z. B. Fungiziden, Insektiziden, Pflanzenschutzmitteln.

10. Verfahren nach einem der vorherigen Ansprüche, auch umfassend
• Aufbringen eines Bindemittels, vorzugsweise ausgewählt aus den Polyvinylalkoholen (PVOH), den Polyvinylacetaten (PVAc), den Polyacrylamiden, den Polyacrylaten, den Polymethacrylaten, den Acrylamid/Acrylat-Copolymeren den Acrylamid/Methacrylat-Copolymeren, den Polyvinylpyrrolidonen (PVP), den Vinylpyrrolidon/Dimethylaminoethylmethacrylat-Copolymeren, den Vinylpyrrolidon/Styrol-Copolymeren, den Vinylpyrrolidon/Vinylacetat-Copolymeren,
den Zellulosederivaten, den natürlichen Gummis, den Tonen, dem Graphit, dem Talk, dem Siliziumdioxid, vor oder gleichzeitig mit dem Aufbringen der Dispersion auf das Pflanzenmaterial; oder
• Aufbringen eines filmbildenden oder gelierenden Mittels, vorzugsweise ausgewählt aus den Polyvinylpyrrolidonen (PVP), den Vinylpyrrolidon/Styrol-Copolymeren, den Vinylpyrrolidon/Vinylacetat-Copolymeren, den Vinylpyrrolidon/Dimethylaminoethylmethacrylat-Copolymeren, den Polyacrylamiden, den Acrylamid/Acrylat-Copolymeren, den Acrylamid/Methacrylat-Copolymeren, den Methylvinylether/Maleinsäureanhydrid-Copolymeren, den Polyurethanen, den Polyvinylalkoholen, den Polyvinylacetaten, den Cellulosederivaten, den Alginaten, den Naturgummis, gleichzeitig mit oder nach dem Aufbringen der Dispersion auf das Pflanzenmaterial; oder
• das Aufbringen mindestens einer Substanz von agronomischem Interesse oder mindestens einer Substanz zur Verbesserung der Entwicklung oder des Wachstums des Pflanzenmaterials, vorzugsweise ausgewählt aus den Düngemitteln, den Hormonen, den Mikroorganismen, den Mykorrhizen, den Wachstumsstimulatoren, den Wachstumsregulatoren, den Pflanzenschutzmitteln, beispielsweise Fungiziden, Insektiziden, Phytoprotektoren, vor, gleichzeitig mit oder nach dem Aufbringen der Dispersion auf das Pflanzenmaterial.

11. Verfahren nach einem der vorherigen Ansprüche, auch umfassend
• die vorherige Herstellung der wässrigen Dispersion, umfassend
a) Partikel mindestens eines quellfähigen Polymers in schwach oder nicht hydrierter Form;
b) mindestens eine Ausgleichsmittelverbindung, ausgewählt aus einem anorganischen Salz, einem organischen Salz, einem organischen Dispergiermittelpolymer und deren Gemischen; oder auch umfassend durch direkte Polymerisation des quellfähigen Polymers in einer wässrigen Lösung, die mindestens eine aus einem anorganischen Salz, einem organischen Salz, einem dispergierenden organischen Polymer und Gemischen davon ausgewählte Ausgleichsmittelverbindung enthält, oder durch einfaches Mischen der Verbindungen a) und b);
• die Trocknung des Pflanzenmaterials nach Aufbringen der Dispersion.

12. Verwendung des Pflanzenmaterials, das nach einem der Ansprüche 1 bis 11 hergestellt wird, zum Kultivieren einer von diesem Pflanzenmaterial abgeleiteten Pflanze.

## Claims

1. Method for treating plant material comprising the application, to all or part of the surface of the plant material, of an aqueous dispersion comprising:
(a) particles of at least one water-swellable polymer in a form non water-swollen or in a form wherein it maintains a water absorption capacity greater than 10 times its volume;
(b) at least one equilibrating agent selected from among a mineral salt, organic salt, dispersant organic polymer and mixtures thereof.

2. The method according to claim 1, wherein the plant material is propagation plant material or reproduction plant material, in particular plant material selected from among seeds, grains, cuttings, seedlings, shoots, roots, rootlets, bulbs, rhizomes, tubers, branches, stems, calluses, buds, fruit and the parts or partial elements of these plant materials as well as the corresponding genetically modified organisms.

3. The method according to one of the preceding claims, wherein the water-swellable polymer is derived from at least one monomer selected from among water-soluble monomers comprising at least one double ethylenic bond, preferably a monomer selected from among:
• anionic monomers, advantageously selected from among:
∘ monomers comprising at least one carboxylic function e.g. acrylic acid, methacrylic acid and the salts thereof;
∘ monomers comprising at least one sulfonic acid function e.g. 2-acrylamido-2-methylpropane sulfonic acid (AMPS) and salts thereof;
∘ non-ionic monomers, advantageously selected from among:
∘ acrylamide and derivatives thereof, in particular N-alkylacrylamides e.g. N-isopropylacrylamide, N-tert-butylacrylamide; N,N-dialkylacrylamides e.g. N,N-dimethylacrylamide and N-methylolacrylamide;
∘ methacrylamide and derivatives thereof;
∘ vinylformamide, N-vinylpyridine, N- vinylpyrrolidone, hydroxyalkyl acrylates, hydroxyalkyl methacrylates, acrylates carrying alkoxy chains; methacrylates carrying alkoxy chains;
• cationic monomers, preferably selected from among:
∘ diallyldialkyl ammonium salts e.g. diallyl dimethyl ammonium chloride (DADMAC);
∘ dialkylaminoalkyl acrylates, dialkylaminoalkyl methacrylates, in particular dialkylaminoethyl acrylate (DAAEA) and dialkylaminoethyl methacrylate (DAAEMA), and the acidified or quaternized forms thereof;
∘ dialkyl-aminoalkylacrylamides, dialkyl-methacrylamides, and the acidified or quaternized forms thereof e.g. acrylamido-propyl trimethyl ammonium chloride;
• zwitterionic monomers, for example selected from among:
∘ sulfobetaine monomers such as sulfopropyl dimethylammonium ethyl methacrylate, sulfopropyl dimethylammonium propylmethacrylamide, sulfopropyl 2-vinylpyridinium;
∘ phosphobetaine monomers such as phosphato ethyl trimethylammonium ethyl methacrylate, carboxybetaine monomers.

4. The method according to one of the preceding claims, wherein the particles of the aqueous dispersion have a mean diameter ranging from 0.1 to 1 000 µm, preferably ranging from 0.1 to 200 µm, more preferably ranging from 0.1 to 20 µm.

5. The method according to one of the preceding claims, wherein the dispersion comprises 5 to 60 % by weight, preferably 15 to 35 % by weight of water-swellable polymer.

6. The method according to one of the preceding claims, wherein the dispersion comprises at least one compound (b) selected from among:
• mineral or organic salts comprising at least one anion selected from among sulfates, dihydrogen phosphates, phosphates, halides; or
• mineral or organic salts comprising at least one cation selected from among sodium, potassium, ammonium, magnesium, calcium, aluminium; or
• mixtures of at least two of these salts; or
• dispersant organic polymers selected from among polymers having a molecular weight ranging from 500 to 100 000 g.mol⁻¹, preferably ranging from 1 000 to 50 000 g.mol⁻¹; more preferably ranging from 1000 to 30 000g.mol⁻¹; or
• dispersant organic polymers selected from among anionic, cationic or amphoteric polymers and copolymers, preferably dispersant organic polymers derived from at least one monomer selected from among the monomers comprising at least one double ethylenic bond, preferably monomers selected from among:
∘ anionic monomers, advantageously selected from among:
▪ monomers comprising at least one carboxylic function e.g. acrylic acid, methacrylic acid and the salts thereof;
▪ monomers comprising at least one sulfonic acid function e.g. 2-acrylamido-2-methylpropane sulfonic acid (AMPS) and salts thereof;
▪ non-ionic monomers, advantageously selected from among:
▪ acrylamide and derivatives thereof, in particular N-alkylacrylamides e.g. N-isopropylacrylamide, N-tert-butylacrylamide; N,N-dialkylacrylamides e.g. N,N-dimethylacrylamide and N-methylolacrylamide;
▪ methacrylamide and derivatives thereof;
▪ vinylformamide, N-vinylpyridine, N-vinylpyrrolidone, hydroxyalkyl acrylates, hydroxyalkyl methacrylates, acrylates carrying alkoxy chains; methacrylates carrying alkoxy chains;
∘ cationic monomers, preferably selected from among:
▪ diallyldialkyl ammonium salts e.g. diallyl dimethyl ammonium chloride (DADMAC);
▪ dialkylaminoalkyl acrylates, dialkylaminoalkyl methacrylates in particular dialkylaminoethyl acrylate (DAAEA) and dialkylaminoethyl methacrylate (DAAEMA), and the acidifed or quaternized forms thereof;
▪ dialkyl-aminoalkylacrylamides, dialkyl-methacrylamides, and the acidified or quaternized forms thereof e.g. acrylamido-propyl trimethyl ammonium chloride, methacrylamido-propyl trimethyl ammonium chloride;
∘ zwitterionic monomers selected for example from among:
▪ sulfobetaine monomers such as sulfopropyl dimethylammonium ethyl methacrylate, sulfopropyl dimethylammonium propylmethacrylamide, sulfopropyl 2-vinylpyridinium;
▪ phosphobetaine monomers, such as phosphato ethyl trimethylammonium ethyl methacrylate, carboxybetaine monomers; or
• polymers or copolymers based on acrylic acid, 2-acrylamido-2-methylpropane sulfonic acid and the salts thereof, and acrylamide.

7. The method according to one of the preceding claims, wherein the dispersion comprises:
• 5 to 45 % by weight, preferably 8 to 27 % by weight of mineral salt or organic salt; or
• less than 30 % by weight, preferably 5 to 20 % by weight of dispersant organic polymer.

8. The method according to one of the preceding claims, wherein application of the dispersion to the plant material is obtained by coating, dipping, spraying or daubing.

9. The method according to one of the preceding claims, wherein the dispersion also comprises at least one substance of agronomic interest or at least one substance allowing improved development or growth of the plant material, preferably a substance selected from among fertilizers, hormones, micro-organisms, mycorrhizas, growth stimulators, growth regulators, phytosanitary products e.g. fungicides, insecticides, safeners.

10. The method according to one of the preceding claims also comprising:
• application of a binding agent preferably selected from among polyvinyl alcohols (PVOH), polyvinyl acetates (PVAc), polyacrylamides, polyacrylates, polymethacrylates, acrylamide/acrylate copolymers, acrylamide/methacrylate copolymers, polyvinylpyrrolidones (PVP), vinylpyrrolidone/dimethylaminoethylmethacrylate copolymers, vinylpyrrolidone/styrene copolymers, vinylpyrrolidone/vinylacetate copolymers, cellulose derivatives, natural gums, clays, graphite, talc, la silica, before or simultaneously with application of the dispersion to the plant material; or
• application of a film-forming or film-coating agent, preferably selected from among polyvinylpyrrolidones (PVP), vinylpyrrolidone/styrene copolymers, vinylpyrrolidone/vinylacetate copolymers, vinylpyrrolidone/dimethylaminoethylmethacrylate copolymers, polyacrylamides, acrylamide/acrylate copolymers, acrylamide/methacrylate copolymers, methylvinylether/maleic anhydride copolymers, polyurethanes, polyvinyl alcohols, polyvinyl acetates, cellulose derivatives, alginates, natural gums, simultaneously with or after application of the dispersion to the plant material; or
• application of at least one substance of agronomic interest or at least one substance allowing improved development or growth of the plant material preferably selected from among fertilizers, hormones, micro-organisms, mycorrhizas, growth stimulators, growth regulators, phytosanitary products, e.g. fungicides, insecticides, safeners before, simultaneously with or after application of the dispersion to the plant material.

11. The method according to one of the preceding claims, also comprising:
• prior preparation of the aqueous dispersion comprising:
(a) particles of at least one water-swellable polymer that is not or only scarcely water-swollen;
(b) at least one compound equilibrating agent from among a mineral salt, organic salt, dispersant organic polymer and mixtures thereof; *or also comprising:*
via polymerisation of the water-swellable polymer directly in an aqueous solution comprising at least one compound equilibrating agent selected from among a mineral salt, organic salt, dispersant organic polymer and mixtures thereof; or via simple mixing of compounds a) and b);
• drying the plant material after application of the dispersion.

12. Use of the plant material prepared according to the method in one of claims 1 to 11 to cultivate a plant derived from this plant material.
